(19) Europäisches Patentamt / European Patent Office / Office européen des brevets

(11) **EP 3 921 225 B1**

(12) **EUROPEAN PATENT SPECIFICATION**

(45) Date of publication and mention
of the grant of the patent:
**11.09.2024 Bulletin 2024/37**

(21) Application number: **20702133.8**

(22) Date of filing: **03.02.2020**

(51) International Patent Classification (IPC):
**B63B 49/00** (2006.01)    **G01C 21/20** (2006.01)
**B63J 99/00** (2009.01)    **B63B 79/10** (2020.01)
**B63B 79/20** (2020.01)    **B63B 79/30** (2020.01)
**B63B 79/40** (2020.01)

(52) Cooperative Patent Classification (CPC):
**B63B 79/10; B63B 79/20; B63B 79/30;
B63B 79/40; G01C 21/203;** B63B 2207/00

(86) International application number:
**PCT/EP2020/052576**

(87) International publication number:
**WO 2020/161055 (13.08.2020 Gazette 2020/33)**

(54) **METHOD AND SYSTEM FOR REDUCING VESSEL FUEL CONSUMPTION**

VERFAHREN UND SYSTEM ZUR REDUZIERUNG DES SCHIFFKRAFTSTOFFVERBRAUCHS

PROCÉDÉ ET SYSTÈME DE RÉDUCTION DE LA CONSOMMATION DE CARBURANT D'UN
NAVIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2019 EP 19155930**

(43) Date of publication of application:
**15.12.2021 Bulletin 2021/50**

(73) Proprietor: **Shell Internationale Research
Maatschappij B.V.
2596 HR The Hague (NL)**

(72) Inventors:
• **STOJANOVIC, Ivan**
  **London WC2R 0ZA (GB)**
• **BROWN, Stephen, Andrew**
  **London WC2R 0ZA (GB)**
• **NEEDHAM, Christopher, Debesh**
  **London E14 5NR (GB)**
• **GODDERIDGE, Bernhard**
  **London, WC2R 0ZA (US)**
• **HELLIWELL, James Matthew**
  **London SE1 7NA (GB)**

(74) Representative: **Shell Legal Services IP
PO Box 384
2501 CJ The Hague (NL)**

(56) References cited:
**WO-A1-2010/031399    CN-A- 104 443 257
SG-A1- 190 462    US-A1- 2016 121 979**

**Description**

FIELD OF THE INVENTION

The disclosure relates to a method for improving the fuel consumption of a vessel or class of vessels through the optimisation of operational parameters. The disclosure also relates to a process for collecting and analysing the vessel data through various mathematical models to further determine optimum operational parameters.

BACKGROUND TO THE INVENTION

Generally, a vessel begins its voyage at a predetermined trim and draft, which will then change during the voyage as a result of internal transfers, such as fuel or lubrication oil transfers, and due to the consumption and production of fresh water and other fluids. For Liquid Natural Gas (LNG), Liquid Petroleum Gas (LPG), and other liquified gas carriers, draft and trim will also alter as cargo reduces through Boil Off Gas (BOG) consumption. This draft and trim may not be the optimum condition for the vessels' current speed. This non-optimum draft and trim condition leads to an increase in resistance, and to maintain a constant speed, more power is required from the main engine or engines to overcome the increased resistance. This leads to an increase in overall fuel consumption which contributes to greater $CO_2$ and other greenhouse gas emissions which could otherwise be prevented by better optimisation of the vessels' trim and draft. Increased operating costs are also seen by the increased fuel consumption.

Currently available technologies for determining optimal ship speed or power source configuration and utilization typically are based on a static analysis that is performed either when an engine is being tested at the factory before being shipped or on a ship during the initial sea trials. These calculations are often performed as manual calculations using approximate data.

After the factory testing and initial sea tests, the optimal operational profile of the ship will change as the vessel and onboard equipment wear, age, are maintained, are operated, etc. Each vessel will look slightly different and the optimal operation parameters will change over time. The existing technologies do not account for these various changes in the operational profile of the ship, which directly relate to the optimal speed and power source configuration and utilization. These existing technologies are based on the prior, static analysis and lack any real-time analysis of the optimal ship performance based on the real-time operational parameters (i.e., current condition) of the ship.

Despite the availability of performance optimization systems, either partly automated or involving operating staff, our assessment shows that vessels currently typically operate at non-optimal condition for a significant part, for instance about 30%, of their total sailing time.

Current industry practice typically only considers trim optimisation as a single parameter in order to reduce main engine power and fuel consumption, and thus far initiatives have delivered limited success. Trim values are usually obtained either by CFD computational modelling or measured at sea trials, both covering a limited number of sailing conditions. Information gained in such a way is less accurate and does not unlock the full potential of the fuel reduction (low number of tested sailing conditions). Conventional solutions also come with relatively high development costs and long time to deployment.

Currently, only the trim parameter is optimised to reduce fuel consumption. US7243009 discloses a system, which uses a statistical model of input data to determine optimum trim only. Whilst this method produces some performance improvements, greater improvements can be achieved. Furthermore, this method relies on the trim, power and speed of the vessel at the present moment in time, thereby limiting accuracy.

In US20140336853A1, a method is disclosed for determining the optimum speed for a vessel using historical data, and a method for calculating the fuel savings achieved from this optimum speed. This method optimises speed only, by the comparison of current ship data to historical data stored on a computing device.

SG190462 discloses a method for optimising fuel efficiency in a marine vessel, comprising various steps in retrieving operational data of the vessel and comparing said data with optimum data to obtain variance thereby automatically adjusting the ballast tank pairs of the vessel based on the variance to obtain an optimal trim of the vessel so as to achieve optimising the fuel efficiency of the vessel.

US2016/121979 discloses a system to enable the identification of a cruise condition such that a ship can provide higher cruise performance than when cruising under a predetermined cruise condition. A ship managing device acquires input data indicating a predetermined cruise condition, and extracts condition data corresponding to the input data. The condition data includes data describing a combination of a cruise condition and an amount of fuel consumption and is predetermined. The ship managing device, using the condition data, identifies the amount of fuel consumption under the cruise condition indicated by the input data, and determines if there is room for improvement in the amount of fuel consumption. Thereafter, the ship managing device generates and outputs monitoring data corresponding to the result of determination.

WO2010/031399 discloses a system for a ship, comprising a plurality of sensors measuring a plurality of data sets including a setting being controllable by the operator of the ship, which data sets each defines a state of the ship at specific sea conditions, said system generates a statistical regression model of the fuel efficiency of the ship, and the optimum setting providing the highest fuel efficiency for the current state of the ship is determined by optimizing the statistical regression model of the fuel efficiency with respect to the setting being controllable by the operator of the ship. In this system, the current state of the ship is determined by optimizing the statistical model with respect to the control variables. The control variables are controllable by the operator of the ship. The incoming data are compared to control variables, and the ship operator is requested to adjust the control variables. Noise filtering is conducted to derive unknown parameters Pf, Pg and the corresponding noise parameters.

Other commonly used methods in the industry for the optimisation of trim use Computational Fluid Dynamics (CFD) or measured sea trials. This only allows a limited number of speed and trim conditions to be tested, and not the full range of normal operating conditions. In addition, the vessel is only tested in the 'as new' condition, and the trim optimisation does not consider the deterioration of performance over time. These CFD methods often do not include Metocean or weather data, or the effect of hull fouling or coating performance, which make the results produced less accurate. The methods of trim optimisation described also come at a high cost, due to the need for expensive CFD software, computing power or the need to run sea trials or model testing on the vessel.

Optimizing ship performance results in the reduction of total vessel fuel consumption and costs and the maximization of vessel profitability. Fuel consumption is based on the operational parameters of the ship, such as by way of example only actual engine and generator performance. Fuel consumption is related to both the amount of fuel required for propulsion of the ship throughout its journey, as well as the fuel needed to power necessary equipment aboard the ship during the ship's voyage. The optimal ship speed must balance the benefits of slowing down the ship in order to save propulsion fuel with the associated costs of the additional electrical load impact (i.e., the power required to operate necessary equipment) on fuel consumption resulting from the excess time required to make the voyage at the slower rate of speed. This optimal speed may also take into account the opportunity for optimizing vessel profit through greater revenue by performing more voyages, if there is additional unmet demand. Further, ship performance may be improved based on the configuration and utilization of various power sources.

SUMMARY OF THE INVENTION

The present disclosure aims to provide a more accurate method and system to optimize sailing parameters.

According to a first aspect, the disclosure provides a method for determining the optimum trim and draft for a vessel in ballast and laden conditions using the analysis of historic vessel data for the vessel being optimised, the method comprising the steps of:

- collecting operational data from the vessel for one or more of its previous voyages, with the operational data comprising one or more operational parameters or data tags;
- filtering out error and noise created by a chosen source of the operational data;
- filtering out an effect of adverse weather, hull fouling and/or other conditions which have been found to decrease the accuracy of the process;
- processing the operational data that has been filtered, by placing the filtered operational data into classes or bins of increasing size of speed, draft and trim to determine the average power for each historic speed, draft and trim condition;
- producing a database of optimum draft and trim conditions based on the operational data, and providing the database to an operator, such as the Captain, or as an input to an automatic draft and trim optimisation system;
- calculating a predicted fuel consumption for each speed, draft and trim condition based on the operational data, to estimate achievable fuel savings;
- comparing the predicted fuel consumption with an achieved fuel consumption for the vessel to determine savings achieved using information on a current fuel price.

The step of filtering out error and noise may include the deletion of data that falls outside of what is deemed reasonably practicable.

The step of filtering out an effect of adverse weather, hull fouling and/or other conditions which have been found to decrease the accuracy of the process may comprise the deletion of data which falls outside of a range of set points based on previous experience.

In an embodiment, the operational parameters include one or more of vessel draft, trim, fuel consumption, date and time of sample collected, speed over ground, speed through water, main engine power, main engine rpm, true wind speed, relative wind angle, engine fuel mass flow rate, fuel consumption, depth of water, shaft rpm, and time since last hull clean.

In another embodiment, the method includes the use of Artificial Neural Networks and Regression Tree Models to further improve the accuracy of the model.

In yet another embodiment, the method includes the step of displaying real-time results to the Captain or an automatic draft and trim control system using a computer software or code, and/or a graphical display.

In an embodiment, the graphical display provides the optimum draft and trim for the vessel to the Captain to alter the current condition of the vessel.

Optionally, each individual step is combined into a work flow which is installed onto a computer or chip to automatically run the analysis.

The method may include the step of continually measuring the current vessel speed to further select the optimum draft and trim.

In an embodiment, the method includes the step of using Artificial Neural Networks to analyse and provide draft, trim and speed optimisation for a whole fleet, the fleet comprising multiple substantially similar or identical vessels.

The method may include the step of using data on fuel quality and main engine mechanical faults to improve the predicted fuel consumption for savings estimation.

According to another aspect, the disclosure provides a system, comprising a tool for implementing the method as described above.

To overcome the limitations of current methods of trim optimisation, a method of analysing vessel data to determine both an optimum trim and an optimum draft for any given vessel speed in both laden and ballast conditions has been disclosed. This method can also determine the best draft and trim condition for the vessel in its present condition, rather than the current method of applying the optimised trim found in the 'as new' condition across the life of the vessel. By using 'real world' data from a vessel in-service, the effects of weather, hull fouling and coating performance can also be accounted for when using this method. CFD and other methods can only make predictions on real world weather based on models and may not give a true representation of real world events. The method disclosed also comes at substantially lower costs than the current methods deployed. The method described requires a source of data which can come from any number of data collection providers. As a further cost reduction, the data can also be collected by information reported manually through a 'noon' or daily report. The process can be run on a typical laptop or computer using freely and widely available low-cost software, with minimum time required to run the process. Currently, existing methods which use historical data cannot provide advice for similar or sister vessels within a fleet. By using methods disclosed, this draft, trim and speed optimisation can be applied across a fleet of similar vessels.

By employing the method of the present disclosure, fuel consumption and associated greenhouse gas emissions can be reduced. Operating costs can be saved due to the reduced fuel consumption. By optimising draft, trim and speed, a vessel can either maintain at a higher speed for the same fuel consumption, or the same speed for a lower fuel consumption. A typical vessel is found to sail in a non-optimal draft and trim condition for a low percentage of its total sailing time. By using this invention, the percentage of sailing time which the vessel spends in the optimum draft, trim and speed condition can be increased. As the draft and trim changes during a voyage due to the consumption and transfer of fuel or other liquids, the draft and trim may then move away from the optimum, and a correction can also be made to adjust the draft and trim back to its optimum.

The system of the present disclosure provides a more accurate, lower-cost, higher-gains solution for optimized sailing parameters. The system also allows fast deployment and can be implemented on existing vessels.

BRIEF DESCRIPTION OF THE DRAWINGS

The drawing figures depict one or more implementations in accord with the present teachings, by way of example only, not by way of limitation. In the figures, like reference numerals refer to the same or similar elements. Herein,

- Figure 1 shows an examplary Draft and Trim Optimisation Work Flow Diagram according to an embodiment of the method of the present disclosure, demonstrating the placing of data into bins or classes; and
- Figure 2 shows an examplary Plotting of Fuel Consumption and Power to Estimate Potential Savings. As disclosed, it is possible to predict the fuel savings achieved though draft and trim optimisation using the equation for the polynomial line of best fit relating fuel consumption and ship power.

DETAILED DESCRIPTION OF THE INVENTION

Certain terms used herein are defined as follows:

"LNG" refers to liquefied natural gas, which is typically cooled to at least a temperature whereat the gas can be in the liquid phase at about 1 bar pressure; for liquefied methane this temperature is about minus 162 degree C;
"draft" may refer to depth of water needed to float a ship; depth below the water line to the bottom of a vessel's hull; and depth of water drawn by a vessel. In the current disclosure, "draft" may in particular refer to the depth below the water line to the bottom of the hull of the vessel; and

"trim" refers to the position of a vessel with reference to the horizontal; In other words, "trim" refers to the difference between the draft of a forward end and the draft of an aft end of the vessel.

Any time that a vessel sails at a given speed, whether carrying a cargo or under ballast, an optimum trim and draft condition exists for that vessel. For a vessel in service a large amount of data is generated which relates to its performance. This data can be gathered by the crew, for instance through a 'noon' report, or through an automated high frequency data collection system connected to the vessels machinery. During operation, the vessel's captain may have selected a draft and trim setting at a given vessel speed which required a lower engine power than a previous draft and trim setting at the same vessel speed.

By the method disclosed, the data can be analysed to determine which historic trim and draft conditions had a better performance than others for a given speed. By providing this information to the ships' Captain, the draft and trim settings which gave a lower main engine power for a given speed can then be selected, which will in turn reduce overall fuel consumption. Savings of 3 to 7% per vessel per annum are achieved by implementing the process of the present disclosure.

The method disclosed uses historic vessel data comprising one or more of the following parameters to be collected:

- date and time of sample collected;
- speed over ground;
- speed through water;
- main engine power;
- main engine rpm;
- true wind speed;
- relative wind angle;
- draft;
- trim;
- engine fuel mass flow rate;
- depth of water;
- shaft rpm; and
- time since last hull clean.

This data can be gathered using either a high frequency data logger (of which there are numerous providers), using 'noon' data reported by the ship's crew, or through any other reliable data source. The time span of the data used should be kept relatively short to avoid the impact of increasing hull fouling from affecting the powering requirements. Data exceeding the period of a year will start to include the effects of increase frictional resistance caused by marine growth on the hull, which will reduce the accuracy of this method.

Data collected from high frequency data loggers is often referred to as 'noisy' data, with errors induced by the data logger. This can include missing data, zero values, or impossibly high or extreme data being captured in the log. Before using this data for analysis, processing or filering of the data by deleting data which falls outside of what is deemed reasonably practicable may take place to remove or reduce the impact of these errors. For instance, zero values, empty data and values outside of those physically possible can be filtered out and removed from the data set. To remove data values outside of values physivcally possible, upper and/or lower thresholds may be set, for instance based on expertise or specifications of a vessel. Thus, filtering removes noise introduced by the sensing equipment.

For instance, the method of the disclosure may filter out any value where speed is greater than the ship's design speed. So if the speed measured by a sensor is more than a predetemined percentage above a predetermined design speed of the respective vessel, said measured speed would be ignored. The design speed is for instance provided by the manufacturer of the respective vessel or otherwise determined beforehand. For instance, if a measured speed is more than 100.1 % of the design speed it would be ignored. For instance, if a measured speed is more than 101% of the design speed it would be ignored. For instance, if a measured speed is more than 102% of the design speed it would be ignored. For instance, if a measured speed is more than 103% of the design speed it would be ignored. For instance, if a measured speed is more than 105% of the design speed it would be ignored.

For example, a data point which captures the vessel's speed at a speed (for instance at 40 knots) over the vessels maximum achievable speed is obviously erroneous and can be removed.

The effect of adverse weather is also removed or filtered to allow the draft and trim optimisation to be conducted. In extreme weather conditions, a greater main engine power is required to overcome increased wave and wind resistance, which then prevents the effect of draft and trim changes from being analysed. For instance, any data recorded when the sea state is great than 4, the Beaufort wind scale is greater than 5, and the current influence is greater than 3% may be ignored. The current influence is a measure of how much the current has affected the vessels speed. It can be calculated as a percentage, for instance as shown in Formula 1:

$$\text{Current Influence [\%]} = \left| \frac{\text{Speed over ground - speed through water}}{\text{Speed over ground}} \right| \text{x100}$$

Herein, speed over ground and speed through water are expressed in knots, wherein 1 knot is equal to about 0.514 m/s. It should be noted that whilst adverse weather data is removed for the analysis, the draft and trim optimisation advice can still be used to adjust draft and trim in conditions of adverse weather. In adverse weather conditions, measuring the savings achieved may however be challenging.

An averaging method then takes place. This puts the historic data into groups or 'bins' of increasing size. Data has been collected over time for the data tags previously listed, which include the speed, draft, trim and power for the vessel during its previous voyages. The historic data is placed in bins of increasing size by rounding the ship speed, draft and trim to the nearest increment, with the rest of the data for that sample also placed in the bin. The historic data for ship speed is averaged to increments of 0.5knots, the draft is averaged to increments of 0.25 metres, and the trim is averaged to increments of 0.5 metres. In each bin, there will then be several data points which now have the same draft, trim and speed, with the other data tags left untouched in the form captured by the data logger. For all the data captured in each bin, a mean average of the power measurements in that bin can be calculated. Each bin will now have one draft, trim, speed and average power value associated to it.

To further improve confidence in the advice given to the vessels' Captain, bins containing a limited number of data points are then ignored. Typically, conditions when the vessel sailed less than 50 times are rejected, although different thresholds can be used. The use of data from sister vessels can also be used to further improve the accuracy. By using data from a sister vessel with the same length, breadth and other geometric parameters, a larger data set is available for analysis. Equally, a sister vessel may have sailed in different draft and trim conditions to the original vessel, or in different parts of the world to the original, expanding the number of conditions available for analysis. The sister vessel, as well as being geometrically similar, should also be mechanically similar in terms of main engine design and arrangement, to allow a comparison of fuel savings to be conducted.

A database has then been developed which shows the average main engine power for a variety of vessel speeds, drafts and trim conditions, with the effect of extreme weather conditions and hull fouling removed. Table 1 below shows an example table demonstrating the changes in main engine power when draft and trim are altered for a constant given speed, and demonstrates the processing method of placing data into classes or bins as described. Only one speed is presented in this example, although this process could be repeated for a predetermined range of vessel speeds. The speed is expressed in knots (symbol: [kn] or [kt]), a unit of speed at sea. A knot is defined as one nautical mile per hour, where a nautical mile is 1,852 meters. A knot is equal to about 1.852 kilometers per hour or 0.514 m/s (so 13 knots is about 6.69 m/s). As demonstrated, the main engine power requirement can change dramatically as draft and trim is changed, even though speed remains constant. In the example of table 1, the lowest engine power requirement (7.93 MW) is more than 35% lower than the highest engine power requirement (12.27 MW).

Table 1

| Bin Number | Speed [Knots] | Draft mid [m] | Draft Fore [m] | Draft Aft [m] | Trim [m] | Power [MW] |
|---|---|---|---|---|---|---|
| 1 | 13 | 10.25 | 10.5 | 10 | -0.5 | 12.27 |
| 2 | 13 | 10.5 | 10.75 | 10.25 | -0.5 | 12.18 |
| 3 | 13 | 10.75 | 11 | 10.5 | -0.5 | 10.99 |
| 4 | 13 | 9.75 | 9.75 | 9.75 | 0 | 10.56 |
| 5 | 13 | 9 | 8.5 | 9.5 | 1 | 10.26 |
| 6 | 13 | 11.25 | 11.75 | 10.75 | -1 | 10.26 |
| 7 | 13 | 10.5 | 10 | 11 | 1 | 9.96 |
| 8 | 13 | 9 | 8.75 | 9.25 | 0.5 | 9.75 |
| 9 | 13 | 10.5 | 10.25 | 10.75 | 0.5 | 9.74 |
| 10 | 13 | 9.75 | 10 | 9.5 | -0.5 | 9.44 |
| 11 | 13 | 9 | 9 | 9 | 0 | 9.37 |

(continued)

| Bin Number | Speed [Knots] | Draft mid [m] | Draft Fore [m] | Draft Aft [m] | Trim [m] | Power [MW] |
|---|---|---|---|---|---|---|
| 12 | 13 | 10.75 | 10.75 | 10.75 | 0 | 9.29 |
| 13 | 13 | 9.5 | 9.5 | 9.5 | 0 | 9.27 |
| 14 | 13 | 11.25 | 11.5 | 11 | -0.5 | 9.27 |
| 15 | 13 | 11 | 11.25 | 10.75 | -0.5 | 8.99 |
| 16 | 13 | 9.25 | 9.25 | 9.25 | 0 | 8.66 |
| 17 | 13 | 9.25 | 9 | 9.5 | 0.5 | 8.37 |
| 18 | 13 | 9.25 | 8.75 | 9.75 | 1 | 8.36 |
| 19 | 13 | 11 | 11 | 11 | 0 | 8.16 |
| 20 | 13 | 11 | 10.75 | 11.25 | 0.5 | 8.1 |
| 21 | 13 | 10 | 10 | 10 | 0 | 7.93 |

The averaging method described provides a simple and easily deployable solution for forecasting draft and trim based on previous operational data. The averaging method however may lead to some inaccuracies, with a mean average error of 10% seen. The averaging method is also limited by its inability to forecast outside of the data set. If the vessel sails into a condition not previously captured in the existing data, a direct comparison of the optimum draft and trim condition cannot be given. To determine the optimum draft and trim outside of the existing data set, improving on these limitations, various mathematical prediction models have been trialed. Random Forrest Regression models can be used to reduce the inaccuracy seen in the averaging method. A reduction in mean average error from 10% to 5% is seen. Limited performance from Random Forest Regression models is experienced however when forecasting outside of the existing data set. Artificial Neural Networks have been tested and implemented as a further optimisation of the method. Artificial Neural Networks have been seen to reduce the error from 10% to 0.5% when compared with the averaging method, with a maximum error of 23% seen when forecasting outside of the data set. For the Artificial Neural Networks to perform as optimally as possible, the weather filtering procedures described before should be ignored.

Artificial Neural Networks (ANN's) are mathematical structures consisting of nodes and connections called edges, which are designed to replicate the function of the human brain. Each network consists of an input and output layer of nodes connected together by edges. Networks can also consist of hidden layers in between the input and output layer. Each node is a mathematical transfer function. Data is given to the input layer, where the node sends a value through to the output layer. This predicted value is compared with an input value to determine the level of error between the predicted and inputted value. The network is trained multiple times to reduce this error. The network can then make predictions based on the original data set seen.

Random Forest Regression (RFR) is a learning model which can perform both mathematical regression and classification tasks using a technique known as Bootstrap Aggregation, or bagging. A single bootstrap aggregation occurs within a decision tree, with random forest regression then being the combination of multiple decision trees. The aim of a decision tree is to split a training data set into the best two-child subsets. A process called tree-growing aims to split the training data into branches and leaves based on this optimal splitting process until no further branching is possible. Each split in a decision tree is effectively asking a yes/no question about the data set, which leads to a predicted value based on the input data set.

By using RFR or ANN techniques to predict the power for each draft and trim condition, accuracy is increased when compared with simple averaging of the power values found in the data set.

With the optimum draft and trim determined using either the averaging method or the mathematical models disclosed, a database is created of these optimum values for each vessel speed. This data is then packaged into a useable display and installed on the bridge of the ship. Depending on infrastructure available on the vessel, this could be in the form of a paper readout, display, software package, or another method of presenting data.

With the system deployed on the bridge, a measurement of the vessel's current speed, draft and trim can be taken. These can then be compared with the speed, draft and trim stored in the system, and the optimum draft and trim for that given speed can be displayed to the Captain, or as an input to the automatic draft and trim control system. The Captain, or an automatically controlled ballasting system, can adjust the vessel to the optimum condition to begin to achieve the fuel savings. The Captain or the automatic ballast control system can then maintain the vessel close to the optimum for as much of the voyage time as possible.

The term 'comparing' herein above relates to implementation rather than generation of results. Unlike prior art systems, the method and system of the present disclosure do not use any comparison to generate results or analysis. Instead, once optimum draft and trim values have been generated by the process of the disclosure, an operator, for instance the captain of a vessel, may check the vessel's current speed with the same speed in the results generated using the method of the disclosure. Thus, the operator identifies the optimum draft and trim. In effect, the captain is comparing his current speed with the same speed in the table (see, for instance, Table 1 for an example) to look up a value. The method of the disclosure however lacks any comparison steps in the generation of the results.

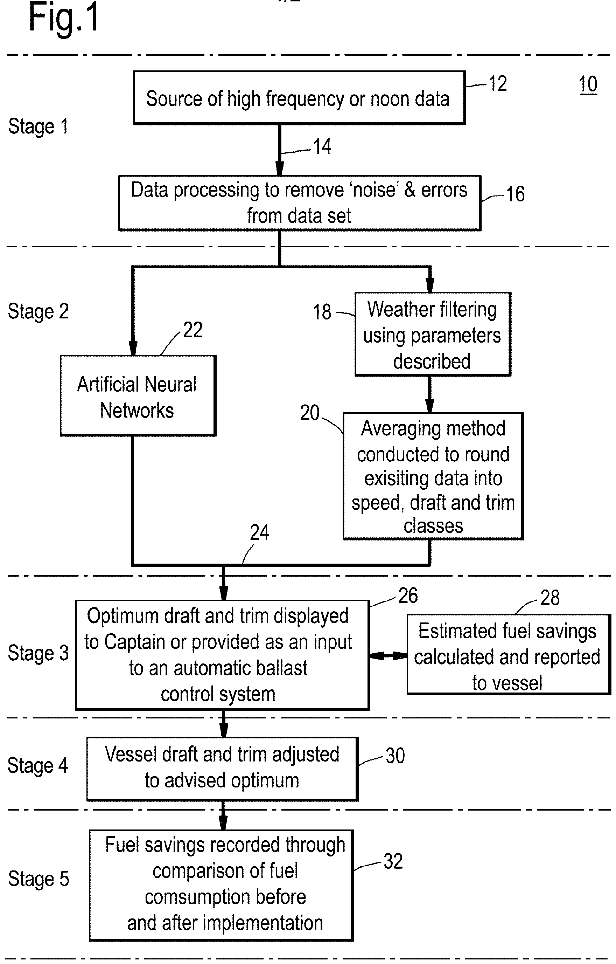

The method of the present disclosure can be automated into a work flow, for instance as detailed in Figure 1. The work flow 10 can include automated data collection, processing, filtering, averaging and outputting into a table, web-based interface or display for the ships' Captain to use to select an optimum trim or draft condition. This work flow consists of several stages.

Stage 1 may comprise a first step 12, including collecting data 14 from a data source (the data source may include field equipment instrumentation and/or dedicated sensors). A second step 16 includes processing of the data 14 for the vessel being optimised to remove errors such as negative and extreme values as described above.

Stage 2 may either involve a weather filtering step 18 and an averaging step 20 as described above, or alternatively step 22 of using mathematical models such as Artificial Neural Networks to provide a forecast 24 of optimum draft and trim.

Stage 3 may include step 26 of displaying the optimum draft and trim 24 determined in Stage 2 to the Captain for the current vessel speed and/or is provided as an input to an automatic ballast control system. Optionally, stage 3 may include step 28 of calculating estimated (potential) fuel savings based on the forecast for optimum draft and trim, and reporting the calculated estimated savings.

Stage 4 includes adjusting the draft and trim either manually or by an automatic ballast control system to the condition displayed in Stage 3, i.e. to the forecast 24 of optimum draft and trim.

Stage 5 may include step 32 of conducting a calculation of actual fuel consumption saved by comparing the average fuel consumption before the date of optimisation with the average fuel consumption after the date of optimisation.

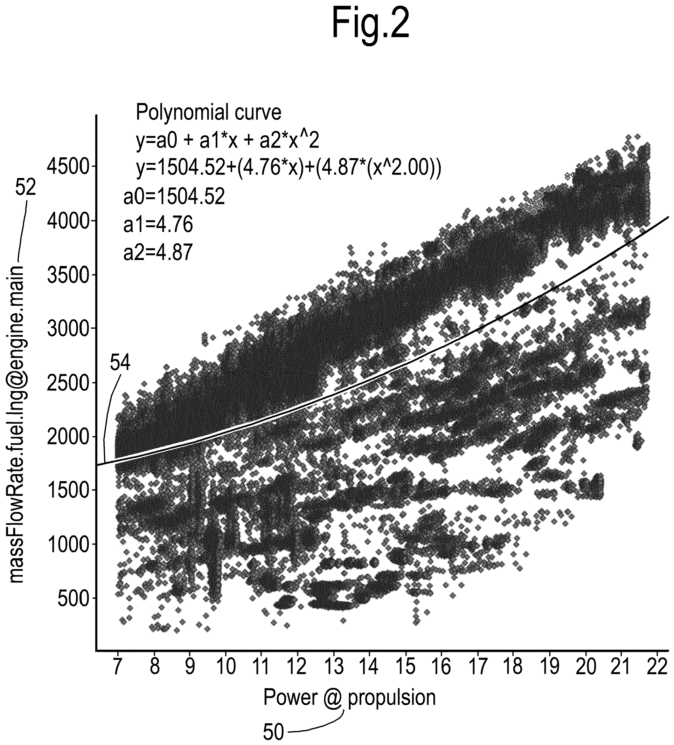

In another stage, the fuel savings are predicted. To predict the potential savings achievable by the vessel, the main engine power 50 (x-axis; for instance expressed in [MW]) against fuel consumption 52 (y-axis; for instance expressed in mass flow rate [kg/s]) is plotted. A polynomial curve of best fit 54 can be applied to the plot, as shown in Figure 2. Extreme outliers to the power or polynomial curve are filtered to improve the best fit of the power curve. The curve should show that as engine power increases, so does fuel consumption. Using the equation of the best fit curve 54 to approximate the relationship between fuel consumption 52 and power 50, the fuel consumption for each averaged power at the optimised draft and trim setting can be calculated.

The fuel consumption verses power curve 54 can be updated continuously by an automated system using the real time data from the ship, to take into account changes to the fuel consumption and power relationship over time, giving an up to date estimate of potential savings. By calculating the difference in fuel consumption between the optimum draft and trim condition with the fuel consumption calculated for each non-optimum draft and trim setting, a difference or 'delta' in the fuel consumption can be determined. Through the summation of these delta fuel saving values, the total potential fuel saving achievable by the vessel is found. This can be multiplied by the current fuel price, and the number of predicted sailing days per year. A factor may be incorporated to consider the percentage of time the Captain choses to implement the method of the present disclosure, and the likelihood that adverse weather will prevent the system from being used. From experience, it is found that the method of the present disclosure may be deployed by the Captain for, for instance, about 30 to 50% or more of the total sailing time.

With the method disclosed employed on board the vessel, the same or a different source of data from the vessel can be used to compare the performance of the vessel before introducing draft and trim optimisation to after the event. The fuel consumption recorded before and after can be compared to determine the savings achieved. Test runs have shown that fuel consumption savings of about 3 to 7% or more per ship per annum are achivable by employing the method disclosed. As a further embodiment, the comparison of the savings achieved could be automated as an additional part of the work flow, as detailed in Figure 1. The fuel savings measured can also be compared with the fuel consumption savings predicted to validate the accuracy of this method.

The disclosed method details a process for the determination of optimum draft and trim to reduce fuel consumption in the ballast and laden condition. The process uses a source of data from the vessel or vessels being optimised to determine the optimum trim and draft for the vessel at any given speed. The data could be in the form of 'noon' reported data, electronic high frequency data, or another source of data. Noon report data is vessel operational data reported once daily, usually by the Chief Engineer, giving a once a day update on the vessel's state.

Several filtering and data optimisation processes are detailed to ensure a good standard of data for the process to be completed. Typically, the data coming from high frequency data recorders tends to be 'noisy', with erroneous values sometimes recorded. Before the method detailed in this patent is applied, filtering to remove extreme values should be conducted. Adverse weather which requires an increased engine power to overcome increased wind and wave resistance is filtered out. Adverse weather has been determined as a sea state greater than 4, Beaufort scale greater than 5 and a current influence greater than 3%. Different limits for adverse weather could be applied without detracting from the process.

An averaging method is then disclosed which looks at which trim and draft conditions in the past data gave lower fuel consumption. During the period for which the data covers, at times the vessel will have sailed at a draft and trim at a given speed which required a lower main engine power than a different draft and trim at the same speed. This is compiled into a database or matrix which indicates which draft and trim conditions at each speed contribute to a lower main engine power. The information in the database or table can then be presented to the Captain, or act as an input to an automatic draft and trim control system. This information can be presented on paper, or using an electronic, web-based or similar type of display. Using the information on the optimum draft and trim for the vessels current speed, the draft and trim can be altered to this optimum condition.

Then, as a further stage to the process, fuel consumption can be predicted based on the historic data to give an estimation of the potential savings to be achieved through the introduction of this method. To estimate the potential fuel savings, the fuel mass flow rate in the historic data should be plotted against the vessels' power, and the equation of the polynomial curve relating these two parameters can be found. This can then be used to estimate the fuel consumption for the calculated average power at each draft and trim condition stored in the database.

Using the estimated fuel consumption at each optimised draft and trim condition, and a knowledge of the number of sailing days per year and the current fuel price, potential savings can be predicted. The data from ships fitted with devices to measure fuel quality can also be used to improve the accuracy of the fuel savings estimation, as changes in fuel quality may affect fuel consumption. Equally, information reported on mechanical issues or faults with the ship's main engines can also be included, as an engine with a mechanical fault may over consume fuel, affecting the fuel consumption estimation. A factor should also be included which considers when adverse weather prevents draft and trim optimisation from being conducted. Typically, it has been found that draft and trim optimisation cannot be conducted due to bad weather or other voyage priorities for 30 to 40% of the total sailing time.

Using the same data collection method used to compute the optimum draft and trim, the actual fuel savings can also be measured. By comparing the fuel consumption data collected before and after the implementation of the draft and trim optimisation, fuel savings can be measured. Through implementation of this process, fuel savings of between 3 and 7% have been measured per ship per annum.

The various stages detailed are incorporated in to a work flow or process which can be automated to various levels. This could be conducted in a semi-manual form, using a spreadsheet application such as Microsoft Excel. To reduce the time required to conduct this optimisation, the described work flow can be automated using a programming language such as Python or C++. As a further embodiment, the output of the process could be automated so that draft and trim is automatically altered by an automatic control system without the Captain's input.

One limitation of the averaging method described is that it can only give the optimum draft and trim for conditions for which the vessel has previously sailed. If the vessel then sails into a condition which it has not previously sailed, the averaging system cannot advise on the optimum draft and trim. Another limitation of the averaging method is that it incorporates some inaccuracy into the analysis. Mean errors of 10% are seen using the averaging method. To improve this, several mathematical models can be used and incorporated into the process to make predictions of optimum draft and trim based on previous performance for new, unseen conditions. Random Forrest Regression and Artificial Neural Network models have been deployed to improve predictions outside of the existing data set.

Artificial Neural Networks have proved most successful in forecasting optimum draft and trim conditions outside of the existing data set, with maximum percentage errors of 23% seen. Artificial Neural Networks can also significantly reduce the inaccuracy in the analysis, with the mean error reduced from 10% to 0.5%.

The system and method of the present disclosure allow reducing main engine power and fuel consumption on ships, by applying advanced analytics processes to identify the optimal sailing parameters. Advice is then provided to the Captains on which parameters to change (and by how much), in order to optimise the voyage and reduce fuel consumption. Advice herein can relate to, for instance, adding ballast water to change draft and trim, adjust speed, etc. The final product can be a user-friendly web-based tool, with proprietary analytics driving outputs.

The method and system of the disclosure does not compare measured operational data with a predetermined default or optimum data set. The method of the disclosure processes and analyses historic data to compute an optimum. The method of the disclosure is not a comparison method to an already optimised data set existing in a memory or other storage of a data processor, or wherein some measured or otherwise identified data is compared to a predetermined voyage condition.

Conventional methods and systems typically include a step of comparing measured data to a pre-determined optimal base case. Processing data in the method and system of the present disclosure does not include comparing and actually takes the processing a step further, by processing the operational data into classes of increasing size of speed, draft and trim to determine the average power for each historic speed, draft and trim condition. For example, the respective lines in table 1 correspond to the "classes" as mentioned.

The system and method enable holistic assessment of vessel hydrodynamic performance and enable the identification of performance sweet-spots, which have previously not been observed using conventional methodologies. The system and method of the disclosure utilize a set of advanced algorithms to process and analyse real-time high-frequency data recorded on ships. It further highlights the optimal values where the ships can operate at a given time and within a given context (wind, current, etc).

With respect to conventional systems, the system and method of the disclosure provide an increased number of optimized parameters, increased optionality on their selection and increased accuracy. Advanced algorithms applied in the system and method of the disclosure can overcome limitations of prior art systems and successfully predict optimized values for a larger number of parameters, providing more optionality (number of interventions) to the Captains.

The results obtained by data analytics have been tested and validated in full-scale on Applicant's vessels, resulting in an error margin below about 5%. The system and method of the disclosure achieved an average exceeding about 3% increase in Main Engine fuel efficiency on typical cargo ships. Said ships may include, but are not limited to, crude oil tankers (MR tankers, VLCC, etc.), LNG carriers, LPG carriers, bulk carriers, container ships, etc.

The present disclosure is not limited to the embodiments as described above . Many modifications are conceivable therein and features of respective embodiments may be combined. The scope of protection of the present application is defined by the appended claims.

**Claims**

1.  A method for determining the optimum trim and draft for a vessel in ballast and laden conditions using the analysis of historic vessel data for the vessel being optimised, the method comprising the steps of:

    - collecting operational data from the vessel for one or more of its previous voyages, with the operational data comprising one or more operational parameters or data tags;
    - filtering out error and noise created by a chosen source of the operational data;
    - filtering out an effect of adverse weather, hull fouling and/or other conditions which have been found to decrease the accuracy of the process;
    - processing the operational data that has been filtered, by placing the filtered operational data into classes or bins of increasing size of speed, draft and trim to determine the average power for each historic speed, draft and trim condition;
    - producing a database of optimum draft and trim conditions based on the processed operational data, and providing the database to an operator, such as the Captain, or as an input to an automatic draft and trim optimisation system;
    - calculating a predicted fuel consumption for each speed, draft and trim condition based on the operational data, to estimate achievable fuel savings; and
    - comparing the predicted fuel consumption with an achieved fuel consumption for the vessel to determine savings achieved using information on a current fuel price.

2.  The method of claim 1, the step of filtering out error and noise including the deletion of data that falls outside an upper threshold and/or a lower threshold to remove one or more values that are zero and/or not physically possible.

3.  The method of one of the previous claims, where the operational parameters include one or more of vessel draft, trim, fuel consumption, date and time of sample collected, speed over ground, speed through water, main engine power, main engine rpm, true wind speed, relative wind angle, engine fuel mass flow rate, fuel consumption, depth of water, shaft rpm, and time since last hull clean.

4.  The method of claim 1, including the use of Artificial Neural Networks and Regression Tree Models to further improve the accuracy of the model.

5.  The method of claim 1, including the step of displaying real-time results to the Captain or an automatic draft and trim control system using a computer software or code, and/or a graphical display.

6.  The method of claim 6, where the graphical display provides the optimum draft and trim for the vessel to the Captain to alter the current condition of the vessel.

7.  The method of claim 1, where each individual step is combined into a work flow which is installed onto a computer or chip to automatically run the analysis.

8. The method of claim 8, including the step of continually measuring the current vessel speed to further select the optimum draft and trim.

9. The method of claim 5, including the step of using Artificial Neural Networks to analyse and provide draft, trim and speed optimisation for a whole fleet, the fleet comprising multiple substantially similar or identical vessels.

10. The method of claim 1, the method including the step of using data on fuel quality and main engine mechanical faults to improve the predicted fuel consumption for savings estimation.

**Patentansprüche**

1. Verfahren zum Bestimmen der optimalen Trimmlage und des optimalen Tiefgangs für ein Schiff in einem Ballast- und einem beladenen Zustand unter Verwendung der Analyse historischer Schiffsdaten für das zu optimierende Schiff, das Verfahren umfassend die Schritte:

   - Sammeln von Betriebsdaten des Schiffs für eine oder mehrere seiner früheren Fahrten, die Betriebsdaten umfassend einen oder mehrere Betriebsparameter oder Datenmarkierungen;
   - Herausfiltern von Fehlern und Rauschen, die durch eine ausgewählte Quelle der Betriebsdaten verursacht werden;
   - Herausfiltern eines Effekts von Schlechtwetter, Rumpfverschmutzung und/oder anderen Zuständen, die nachweislich die Genauigkeit des Verfahrens verringern;
   - Verarbeiten der Betriebsdaten, die gefiltert wurden, durch ein Einordnen der gefilterten Betriebsdaten in Klassen oder Behälter mit zunehmender Größe hinsichtlich Geschwindigkeit, Tiefgang und Trimmlage, um die Durchschnittsleistung für jeden historischen Geschwindigkeits-, Tiefgangs- und Trimmlagenzustand zu bestimmen;
   - Erstellen einer Datenbank mit optimalen Tiefgangs- und Trimmlagenzuständen basierend auf den verarbeiteten Betriebsdaten und Bereitstellen der Datenbank für einen Bediener, beispielsweise den Kapitän, oder als eine Eingabe für ein automatisches Tiefgangs- und Trimmlagenoptimierungssystem;
   - Berechnen eines prognostizierten Kraftstoffverbrauchs für jeden Geschwindigkeits-, Tiefgang- und Trimmlagenzustand basierend auf den Betriebsdaten, um erreichbare Kraftstoffeinsparungen abzuschätzen; und
   - Vergleichen des prognostizierten Kraftstoffverbrauchs mit einem tatsächlichen Kraftstoffverbrauch des Schiffs, um Einsparungen zu bestimmen, die unter Verwendung von Informationen zu einem aktuellen Kraftstoffpreis erzielt werden.

2. Verfahren nach Anspruch 1, wobei der Schritt des Herausfilterns von Fehlern und Rauschen das Löschen von Daten umfasst, die außerhalb einer oberen Schwelle und/oder einer unteren Schwelle liegen, um einen oder mehrere Werte zu entfernen, die Null sind und/oder physikalisch nicht möglich sind.

3. Verfahren nach einem der vorstehenden Ansprüche, wobei die Betriebsparameter eines oder mehrere umfassen von Tiefgang des Schiffes, Trimmlage, Kraftstoffverbrauch, Datum und Uhrzeit der Probensammlung, Geschwindigkeit über Grund, Geschwindigkeit durch Wasser, Leistung des Hauptmotors, Drehzahl des Hauptmotors, wahrer Windgeschwindigkeit, relativem Windwinkel, Kraftstoffmassendurchflussrate des Motors, Kraftstoffverbrauch, Wassertiefe, Wellendrehzahl und Zeit seit der letzten Rumpfreinigung.

4. Verfahren nach Anspruch 1, einschließlich der Verwendung künstlicher neuronaler Netzwerke und Regressionsbaummodelle, um die Genauigkeit des Modells weiter zu verbessern.

5. Verfahren nach Anspruch 1, einschließlich des Schritts eines Anzeigens von Echtzeitergebnissen an den Kapitän oder eines automatischen Tiefgangs- und Trimmlagenkontrollsystems unter Verwendung einer Computersoftware oder eines Codes und/oder einer grafischen Anzeige.

6. Verfahren nach Anspruch 6, wobei die grafische Anzeige dem Kapitän den optimalen Tiefgang und die optimale Trimmlage des Schiffes anzeigt, um den aktuellen Zustand des Schiffes zu ändern.

7. Verfahren nach Anspruch 1, bei dem jeder einzelne Schritt zu einem Arbeitsablauf kombiniert wird, der auf einem Computer oder Chip installiert ist, um die Analyse automatisch auszuführen.

8. Verfahren nach Anspruch 8, einschließlich des Schritts eines kontinuierlichen Messens der aktuellen Schiffsgeschwindigkeit, um den optimalen Tiefgang und die optimale Trimmlage weiter auszuwählen.

9. Verfahren nach Anspruch 5, einschließlich des Schritts des Verwendens künstlicher neuronaler Netzwerke, um eine Tiefgangs-, Trimmlagen- und Geschwindigkeitsoptimierung für eine gesamte Flotte bereitzustellen, die Flotte umfassend mehrere im Wesentlichen ähnliche oder identische Schiffe.

10. Verfahren nach Anspruch 1, wobei das Verfahren den Schritt des Verwendens von Daten über Kraftstoffqualität und mechanische Fehler des Hauptmotors einschließt, um den prognostizierten Kraftstoffverbrauch für Einsparungsschätzungen zu verbessern.

**Revendications**

1. Procédé permettant de déterminer l'assiette et le tirant d'eau optimaux pour un navire dans des conditions de lest et de charge, à l'aide de l'analyse de données historiques de navire pour le navire étant optimisé, le procédé comprenant les étapes consistant à :

   - collecter des données de fonctionnement provenant du navire pour un ou plusieurs de ses voyages précédents, les données de fonctionnement comprenant un ou plusieurs paramètres de fonctionnement ou marqueurs de données ;
   - éliminer par filtrage l'erreur et le bruit créé par une source choisie des données de fonctionnement ;
   - éliminer par filtrage un effet du mauvais temps, d'un encrassement de coque et/ou d'autres conditions dont on a trouvé qu'elles diminuaient la précision du processus ;
   - traiter les données de fonctionnement qui ont été filtrées, en plaçant les données de fonctionnement filtrées dans des classes ou compartiments de taille croissante de vitesse, de tirant d'eau et d'assiette pour déterminer la puissance moyenne pour chaque condition historique de vitesse, de tirant d'eau et d'assiette ;
   - produire une base de données de conditions optimales de tirant d'eau et d'assiette en fonction des données de fonctionnement traitées, et fournir la base de données à un opérateur, tel que le capitaine, ou en guise d'entrée à un système d'optimisation automatique de tirant d'eau et d'assiette ;
   - calculer une consommation en carburant prédite pour chaque condition de vitesse, de tirant d'eau et d'assiette en fonction des données de fonctionnement, pour estimer des économies de carburant pouvant être obtenues ; et
   - comparer la consommation en carburant prédite à une consommation en carburant obtenue pour le navire pour déterminer des économies obtenues à l'aide des informations relatives à un prix actuel de carburant.

2. Procédé selon la revendication 1, l'étape d'élimination par filtrage d'erreur et de bruit comportant la suppression de données qui tombent en dehors d'un seuil supérieur et/ou d'un seuil inférieur pour éliminer une ou plusieurs valeurs qui valent zéro et/ou ne sont pas physiquement possibles.

3. Procédé selon l'une des revendications précédentes, où les paramètres opérationnels comportent un ou plusieurs parmi tirant d'eau de navire, assiette, consommation en carburant, date et heure de l'échantillon collecté, vitesse au sol, vitesse dans l'eau, puissance du moteur principal, régime du moteur principal, vitesse réelle du vent, angle relatif du vent, débit massique de carburant moteur, consommation de carburant, profondeur d'eau, régime d'arbre et temps écoulé depuis le dernier nettoyage de coque.

4. Procédé selon la revendication 1, comportant l'utilisation de réseaux neuronaux artificiels et de modèles d'arbres de régression pour améliorer encore la précision du modèle.

5. Procédé selon la revendication 1, comportant l'étape d'affichage de résultats en temps réel au capitaine ou à un système de commande automatique de tirant d'eau et d'assiette à l'aide d'un logiciel ou code informatique, et/ou d'un affichage graphique.

6. Procédé selon la revendication 6, où l'affichage graphique fournit le tirant d'eau et l'assiette optimaux pour le navire au capitaine pour modifier la condition actuelle du navire.

7. Procédé selon la revendication 1, où chaque étape individuelle est combinée en un flux de travail qui est installé sur un ordinateur ou une puce pour exécuter automatiquement l'analyse.

8. Procédé selon la revendication 8, comportant l'étape consistant à mesurer continuellement la vitesse actuelle de navire pour sélectionner en outre le tirant d'eau et l'assiette optimaux.

9. Procédé selon la revendication 5, comportant l'étape d'utilisation de réseaux neuronaux artificiels pour analyser et fournir une optimisation de tirant d'eau, d'assiette et de vitesse pour une flotte entière, la flotte comprenant de multiples navires sensiblement similaires ou identiques.

10. Procédé selon la revendication 1, le procédé comportant l'étape d'utilisation de données concernant la qualité de carburant et des défaillances mécaniques de moteur principal pour améliorer la consommation de carburant prédite pour une estimation d'économies.

# Fig.1

10

**Stage 1**

Source of high frequency or noon data —12

—14

Data processing to remove 'noise' & errors from data set —16

**Stage 2**

18 — Weather filtering using parameters described

22
Artificial Neural Networks

20 — Averaging method conducted to round exisiting data into speed, draft and trim classes

24

**Stage 3**

Optimum draft and trim displayed to Captain or provided as an input to an automatic ballast control system —26

↔

Estimated fuel savings calculated and reported to vessel —28

**Stage 4**

Vessel draft and trim adjusted to advised optimum —30

**Stage 5**

Fuel savings recorded through comparison of fuel comsumption before and after implementation —32

# Fig.2

Polynomial curve
y=a0 + a1*x + a2*x^2
y=1504.52+(4.76*x)+(4.87*(x^2.00))
a0=1504.52
a1=4.76
a2=4.87

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7243009 B
- US 20140336853 A1
- SG 190462
- US 2016121979 A
- WO 2010031399 A